# EUROPEAN PATENT SPECIFICATION

(11) **EP 2 120 440 B1**
(45) Date of publication and mention of the grant of the patent: **19.10.2011**
(21) Application number: 08706632.0
(22) Date of filing: 03.02.2008
(51) Int. Cl.: H04M 7/00

(54) **A METHOD, TERMINAL AND SYSTEM FOR IMPLEMENTING VIDEO BINDING IN A VOICE COMMUNICATION NETWORK**
VERFAHREN, GERÄT UND SYSTEM ZUR HERSTELLUNG EINER VIDEOVERBINDUNG IN EINEM KOMMUNIKATIONSNETZWERK
PROCÉDÉ, TERMINAL ET SYSTÈME DE MISE EN OEUVRE D'UNE LIAISON VIDÉO DANS UN RÉSEAU DE COMMUNICATION VOCALE

(30) Priority: 30.03.2007 CN 200710095931
(43) Date of publication of application: 18.11.2009
(73) Proprietor: Huawei Technologies Co., Ltd., Longgang District, Shenzhen Guangdong 518129 (CN)
(72) Inventor: LIN, Yong, Shenzhen Guangdong 518129 (CN)
(74) Representative: Körber, Martin Hans
(86) International application number: PCT/CN2008/070257
(87) International publication number: WO 2008/119272

(56) References cited:
- EP-A1- 1 566 984
- EP-A2- 1 515 555
- CN-A- 1 874 480
- CN-Y- 2 798 466
- US-A1- 2006 276 179

## Description

### FIELD OF THE INVENTION

The present invention relates to a technique for implementing a video communication in a voice communication network, and particularly, to a method, terminal and system for implementing video binding in a voice communication network.

### BACKGROUND

Nowadays, in the process of using video communication services, a video terminal with a video communication function is normally required. For example, in order to perform a video communication, a user that has a voice telephone such as a public switch telephone network (PSTN) terminal is required to further have a video terminal such as a session initiation protocol (SIP) terminal with a video function. In this way, when a voice communication is required, the PSTN terminal is used to perform the communication; and when a video communication is required, the SIP terminal is used to perform the communication. However, such a way makes it not easy for the user to accept the video communication, because it not only increases the costs for the user to use the video communication but also makes the process of the video communication complicated. On the other hand, it is not easily acceptable for the user to use a video without any restrictions at the start time, and it is more acceptable for the user to start the video during a voice communication after a successful negotiation between two communication parties, or after a command is given by one of the two parties.

Therefore, how to implement a video communication in a voice communication network by means of video binding instead of employing a video terminal to implement the video communication independent of the voice communication network becomes a problem to resolve. In addition, after implementing the video communication, how to start the video communication according to a user's requirement in a communication process over the voice communication network is also a problem to resolve.

US 2006/0276179 A1 concerns a method and systems providing access to integrated communications services.

EP 1566984 A1 concerns a method of cooperatively providing voice services, carried over a circuit-switched ("CS") type network, with multimedia services, carried over a packet-switched ("PS") type network to a wireless unit.

### SUMMARY

An embodiment of the present invention provides a method for implementing video binding in a voice communication network, and the method is able to implement a video communication in the process of a voice communication in which a video service is bound.

An embodiment of the present invention provides a terminal and a system for implementing video binding in a voice communication network, and the terminal and the system are able to implement a video communication in the process of a voice communication in which a video service is bound.

According to the objects described above, the technical solutions of the present invention are implemented in the following way.

A system for implementing a video communication in the process of a voice communication in which a video service is bound, comprising a terminal, a soft switch and a unit for storing subscription information for a video binding service of the terminal, wherein,
the terminal is adapted to initiate, over the voice communication network, a voice call to the soft switch, and send, over a video communication network, to the soft switch a call request for video switching;
the soft switch is adapted to establish, over the voice communication network, the voice call after receiving the voice call from the terminal, and establish a video communication according to the subscription information for the video binding service of the terminal obtained by querying the unit for storing the subscription information for the video binding service of the terminal, after receiving, over the video communication network, the call request for video switching;
the unit for storing the subscription information for the video binding service of the terminal is adapted to send the queried subscription information for the video binding service of the terminal to the soft switch; and
wherein after the successful relay of the voice call between the calling and called terminals or in the process of this relay, the soft switch is further adapted to send a video binding service registration callback to the calling terminal over the session initiation protocol (SIP) network wherein the callback carries a calling number, a original called number which is the called number used in this voice communication and a video calling number identified by the video binding service.

A method for implementing a video communication in the process of a voice communication in which a video service is bound, wherein the method comprises:
getting access, by a calling terminal and a called terminal, to the voice communication network and a video communication network respectively; and
establishing a video communication between the calling and called terminals over the video communication network, during a voice communication between the calling and called terminals over the voice communication network;
wherein the accessing, by the calling terminal and the called terminal, the video communication network further comprises:
   pre-storing subscription information for a video binding service in a storage module at the video communication network side; and
   during the voice communication between the calling and called terminals, accessing, by a soft switch of the video communication network, the storage module to obtain the subscription information for the video binding service of the calling and called terminals, and enabling the calling and called terminals to get access to the video communication network according to the subscription information for video binding service; and
   sending, after the successful relay of the voice call between the calling and called terminals or in the process of this relay, by the soft switch, a video binding service registration callback to the calling terminal over the session initiation protocol (SIP) network wherein the callback carries a calling number, a original called number which is the called number used in this voice communication and a video calling number identified by the video binding service.

It can be seen from the scheme described above that, in embodiments of the present invention, the communication terminal for the voice communication and the communication terminal for the video communication are provided to get access to the voice communication network and the video communication network respectively; the video service is bounded to the communication terminal for the voice communication, and in the process when the calling terminal and the called terminal are performing the voice communication over the voice communication network, the video communication between the calling and called terminals is established over the video communication network if the video communication is needed, so that the video communication is implemented during the voice communication.

In another aspect, a user is more likely to accept the scheme described above, since in the process of the voice communication, the video communication may be started or terminated arbitrarily by the calling terminal and the called terminal according to the instructions of the calling and called user.

### BRIEF DESCRIPTION OF THE DRAWINGS

Fig. 1 is a schematic diagram of a first system for implementing video binding in a voice communication network according to an embodiment of the present invention;
Fig. 2 is a schematic diagram of a second system for implementing video binding in a voice communication network according to an embodiment of the present invention;
Fig. 3 is a schematic diagram of a third system for implementing video binding in a voice communication network according to an embodiment of the present invention;
Fig. 4 is a schematic diagram of a fourth system for implementing video binding in a voice communication network according to an embodiment of the present invention;
Fig. 5 is a schematic diagram of a fifth system for implementing video binding in a voice communication network according to an embodiment of the present invention;
Fig. 6 is a schematic diagram of a terminal for implementing video binding in a voice communication network according to an embodiment of the present invention;
Fig. 7 is a schematic diagram of a terminal for implementing video binding in an PSTN network according to an embodiment of the present invention;
Fig. 8 is a flowchart of a method for implementing video binding by a calling terminal and a called terminal according to an embodiment of the present invention;
Fig. 9 is an information interchanging flowchart that illustrates the process of implementing video binding by a calling terminal and a called terminal according to an embodiment of the present invention, taking the system described in Fig. 1 as an example;
Fig. 10 is an information interchanging flowchart that illustrates the process of implementing video binding by a calling terminal and a called terminal according to an embodiment of the present invention, taking the system described in Fig. 2 as an example;
Fig. 11 is a flowchart of a first method for querying the subscription information for video binding service stored in a smart home location register (SHLR) according to an embodiment of the present invention; and
Fig. 12 is a flowchart of a second method for querying the subscription information for video binding service stored in a SHLR according to an embodiment of the present invention.

### DETAILED DESCRIPTION

In order to make the objects, technology solutions and advantages of the present invention clear, the disclosure of the present invention is described in detail with reference to embodiments in conjunction with drawings.

For implementing a video communication in a voice communication network, according to an embodiment of the present invention, a video binding service represented as video binding (B-VIDEO, BIND video) is provided in the voice communication network. In particular, a voice telephone is bound with a video service, so that the video communication may be started by a user when necessary in the process of the voice communication for the user over the voice communication network.

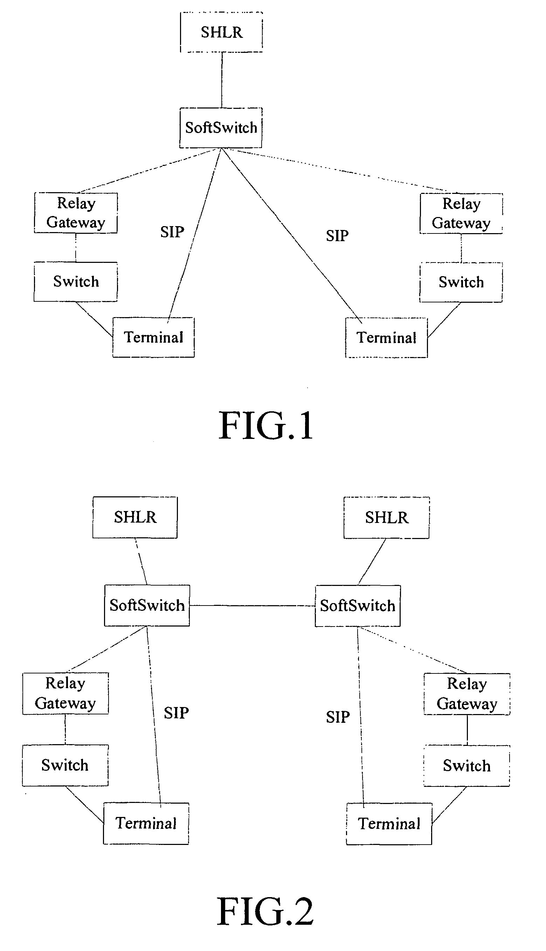

Fig. 1 is a schematic diagram of the first system for implementing video binding in a voice communication network according to an embodiment of the present invention. Assuming that the voice communication network is a PSTN network, the system is suitable for such a case that both a calling terminal and a called terminal have PSTN terminals and belong to the same administration office. The system includes terminals with a video communication function, switches, relay gateways, a soft switch (SoftSwitch) and an SHLR. A terminal with the video communication function may get access to the PSTN network, that is to say, the terminal may connect to a switch and a relay gateway in the PSTN network in turn, and the relay gateway in the PSTN network enables the terminal with the video communication function to perform a voice communication with another PSTN terminal or a terminal in another voice communication network through the SoftSwitch. The terminal with the video communication function may also get access to a SIP network, that is to say, the terminal may employ the SIP to connect to the SoftSwtich directly, and the SoftSwtich enables the terminal with the video communication function to perform a video communication with another SIP terminal or another terminal supporting the video communication function, according to video binding subscription information queried from the SHLR and associated with the terminal having the video communication function.

The SoftSwitch is responsible for the triggering, processing and charging for the video binding service of the terminal.

The relay gateway is responsible for the interaction with the switch in the PSTN network for implementing connectivity among PSTN networks.

According to this embodiment, the terminal with the video communication function includes a PSTN video phone and a SIP video phone (the SIP video phone may also be an H.323 video phone, etc.), which share the microphone and headphone on the terminal. The terminal is referred to as a convergence terminal. When the terminal employs the SIP video phone, an asymmetric digital subscriber loop (ADSL) modem may be integrated into the terminal for accessing SIP network via the ADSL modem when a video communication is needed. Because the terminal may get access to both the PSTN network and the SIP network, it has a PSTN number and a video number for identifying itself in the both networks respectively. The video number is a video binding service number which is typically imperceptible for the user.

The SHLR is adapted to save subscription information for video binding service. The SHLR may save a corresponding relationship between a calling number in the PSTN network that has registered a video binding service and a video calling number in the SIP network, and a corresponding relationship between a called number of a called terminal in the PSTN network and a video called number in the SIP network. The SHLR may provide a query for the subscription information for video binding service to a SoftSwitch, such as providing to the SoftSwtich a query for the corresponding relationship between the calling and called numbers of the calling and called terminals in the PSTN network and the video calling and called numbers of the calling and called terminals in the SIP network, and providing a query for whether the calling and called terminals possess video binding services.

Of course, in addition to the SHLR, the subscription information for video binding service may also be stored in other devices, for example, stored in the SoftSwitch.

According to an embodiment of the present invention, the SoftSwitch and the relay gateway may communicate mutually through the H248 protocol; the SoftSwitch and the SHLR may communicate mutually through a manufacturing automation protocol (MAP+) or Diameter protocol. The terminal with the video communication function may connect to the switch in the PSTN network through a telephone line, and employ the SIP to communicate with the SoftSwitch.

Fig. 2 is a schematic diagram of the second system for implementing video binding in a voice communication network according to an embodiment of the present invention. Assuming that the voice communication network is a PSTN network, the system is suitable for a case that both the calling terminal and the called terminal have PSTN terminals and belong to different administration offices. In this case, the subscription information for video binding service of the calling and called terminals is stored in the SHLRs of different administration offices respectively. Each of the different administration offices is equipped with a SoftSwtich. The SoftSwtich obtains the subscription information for video binding service of a terminal from the SHLR of the same administration office. The SoftSwitches of different administration offices interchange messages through SIP to interchange the subscription information for video binding service of the calling and called terminals.

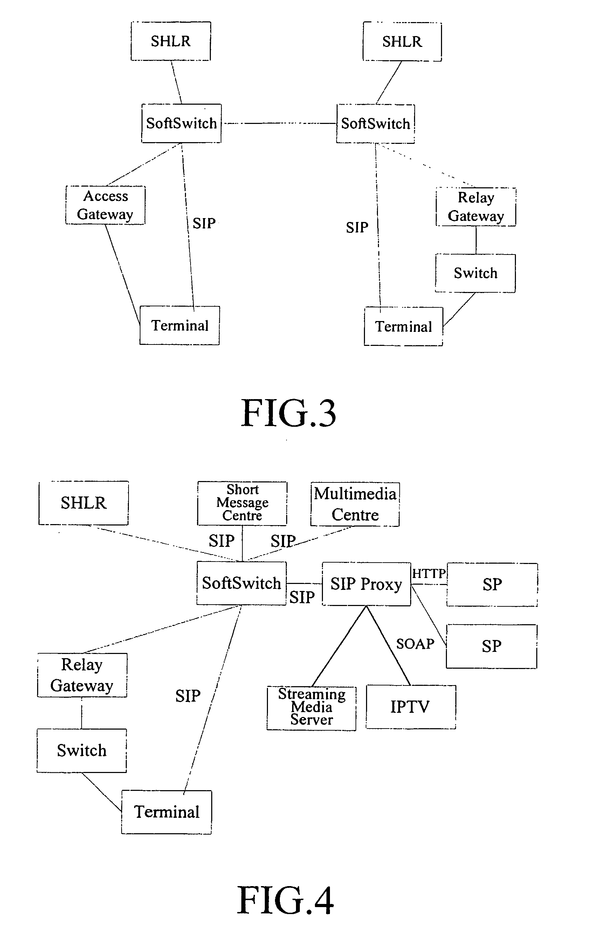

Fig. 3 is a schematic diagram of the third system for implementing video binding in a voice communication network according to an embodiment of the present invention. The system is suitable for a case that one of calling terminal and called terminal has a PSTN terminal and the other has an access gateway (AG) terminal, and the calling terminal and called terminal belong to different administration offices. In this case, the subscription information for video binding service of the calling and called terminals is stored in the SHLRs of different administration offices respectively. Each of the different administration offices is equipped with a SoftSwtich. The SoftSwtich obtains the subscription information for video binding service of a terminal from the SHLR of the same administration office. The SoftSwitches of different administration offices interchange messages through SIP to interchange the subscription information for video binding service of the calling and called terminals.

When an AG terminal in the calling and called terminals performs a voice communication, the access to other networks, such as a PSTN network, is performed through the AG and SoftSwitch. The AG interchanges messages with the SoftSwitch through the Media Gateway Control Protocol (MGCP), the H248 protocol or the SIP.

Fig. 4 is a schematic diagram of the fourth system for implementing video binding in a voice communication network according to an embodiment of the present invention. Assuming that the voice communication network is a PSTN network, the system provides value added services of a SIP network, including short messages, multimedia messages, netpages or information pushing, short number dial-up access services and so on, to a calling terminal on the basis of the system of Fig. 1 or Fig. 2. These services may be provided by a short message centre, a multimedia message centre and a SIP proxy respectively, which interact with the SoftSwitch through SIP. The SIP proxy interchanges information with service providers (SPs), which provide different value added services, through hypertext transfer protocol (HTTP) to implement netpage or information pushing services and so on. The SIP proxy also provides the translation from a short number to a uniform resource locator (URL) of a SIP network to achieve the short number dial-up access function of the calling terminal. The short message centre has a short message forwarding function and the multimedia message centre has a multimedia message forwarding function.

In Fig. 4, the SIP proxy may provide the calling and called terminals with a uniform authentication for an internet protocol television video (IPTV) and a user, provide a simple object access protocol (SOAP) translation for intercommunication with the IPTV and provide IPTV functions to the calling and called terminals, through the information interchanging with the IPTV by means of the SOAP. The SIP proxy may also provide the calling and called terminals with an intercommunication and authentication function for on demand play or/and live show of the stream of a video binding service through the information interchanging with a stream media server by means of the SIP or the H323 protocol.

In the systems as shown in Fig. 1 to Fig. 4, a PSTN terminal may also has the voice communication function only. A separate terminal with the video communication function may be added to the PSTN terminal. For example, a TV phone may be connected to the PSTN terminal. The terminal with the video communication function is used to transmit a video to the connected PSTN terminal after a video communication is established between the terminal with the video communication function and another terminal with the video communication function over a SIP network (in this case, the PSTN terminal is required to be equipped with an video displaying function and an video transmitting function through an air interface or other communication connections). In this way, the video binding service between the calling and called mobile terminals is implemented in the process of voice communication.

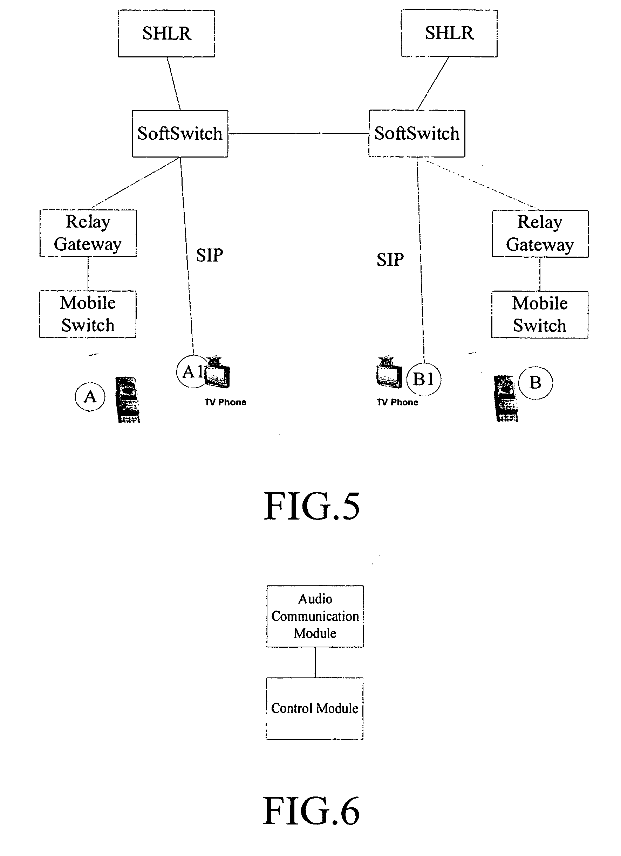

Fig. 5 is a schematic diagram of the fifth system for implementing video binding in a voice communication network according to an embodiment of the present invention. The voice communication network is a mobile communication network, which includes calling and called mobile terminals A, B with voice communication functions, calling and called TV Phones A1, B1 with video communication functions, mobile switches and relay gateways for administrating the calling and called mobile terminals, SoftSwtiches and SHLRs for administrating the calling and called mobile terminals.

When performing a voice communication, the calling mobile terminal initiates a voice call. The voice call reaches the SoftSwitch, to which the calling mobile terminal belongs, through the mobile switch and the relay gateway to which the calling mobile terminal belongs. The SoftSwitch to which the calling mobile terminal belongs relays the voice call to the called mobile terminal through the SoftSwitch to which the called mobile terminal belongs as well as the relay gateway and the mobile switch to which the called mobile terminal belongs, so as to establish the voice communication. In the process of the voice communication, in order to perform a video communication, the calling mobile terminal initiates a video call to the calling TV PHONE, and the called mobile terminal initiates a video call to the called TV PHONE; the calling and called TV Phones get access to the SoftSwitches to which they belong through SIP respectively; and the SoftSwtiches to which the calling and called TV Phones belong get access to the SHLRs to which they belong, so as to obtain the subscription information for video binding service of the calling and called TV Phones. After the subscription information for video binding service of the calling and called TV Phones is obtained and the video communication between the calling and called TV Phones is established, the calling TV Phone transmits, through an air interface, the video to the calling mobile terminal which has the video displaying function and the function for transmitting images through an air interface or other communication connections, and the called TV Phone transmits, through an air interface, the video image to the called mobile terminal which has the image display function and the function for transmitting images through an air interface or other communication connections. In this way, the video binding service of the calling and called mobile terminals in the voice communication process is implemented.

In the system as shown in Fig. 5, the calling and called mobile terminals may belong to different SoftSwitches or belong to a same SoftSwitch. Accordingly, there are one or two SHLRs to store the subscription information for video binding service of the calling and called mobile terminals. The TV Phone may also be integrated into the calling or called mobile terminal.

In the systems as shown in Fig. 1-Fig. 5, the SoftSwitches which take part in the voice communication between the calling and called terminals and the SoftSwitches which take part in the video communication between the calling and called terminals may be different devices. In this case, the SHLRs which store the video binding information of the calling and called terminals interchange information with the SoftSwitches which take part in the video communication between the calling and called terminals, to provide the video binding information of the calling and called terminals to the SoftSwitches which take part in the video communication between the calling and called terminals, so as to implement the video communication between the calling and called terminals. The video binding information of the calling and called terminals may be stored in an SHLR, an ordinary HLR, a SoftSwitch, or other devices.

Fig. 6 is a schematic diagram of a terminal for implementing video binding in a voice communication network according to an embodiment of the present invention. The terminal includes a voice communication module and a control module.

The voice communication module is adapted to get access to the voice communication network under the control of the control module in order to perform a voice communication;

The control module is adapted to obtain a video, perform a video communication, and control the voice communication of the voice communication module.

In the embodiment, a video communication module is also included. The video communication module is integrated in the terminal or is provided separately, and is adapted to get access to a video communication network, perform the video communication over the video communication network, and provide the video to the control module.

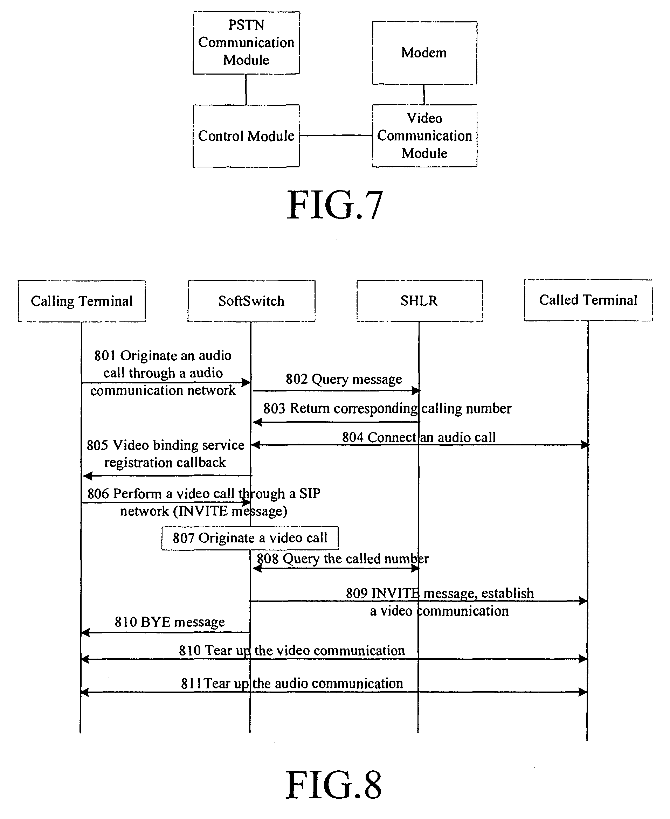

The follow description is base on a specific embodiment. Fig. 7 is a schematic diagram of a terminal for implementing video binding in a PSTN network according to an embodiment of the present invention. The terminal includes both voice communication and video communication functions. The terminal includes a PSTN communication module, a control module, a video communication module and a modem.

The PSTN communication module is adapted to get access to the PSTN network under the control of the control module, and perform a voice communication over the PSTN network;

The video communication module is adapted to get access to a video communication network (for example, a SIP network) through the modem under control of the control module, and perform a video communication over the video communication network.

The control module is adapted to receive a command on whether to perform the video communication, and control the operations of the video communication module and the PSTN communication module according to the command.

The SIP network is taken as an example of the video communication network to provide the following detailed description.

When both the calling terminal and the called terminal are terminals with the video communication function, the calling terminal and the called terminals may get access to the SIP network through ADSL modems respectively. The calling terminal calls the called terminal over a voice communication network. The calling terminal displays a pre-set local image. According to a call flow of the voice communication network, the calling terminal dials the number of the called terminal in the voice communication network, the call is relayed to the called terminal through switches and relay gateways, the called terminal rings (or plays music or displays) to prompt an incoming call, and the called terminal accepts the call. The called terminal and the calling terminal perform the voice communication. The called terminal may also display a pre-set local image. If the calling user wants to perform a video communication, the user may send a video switching command to the calling terminal. The calling terminal performs the process for establishing video connection with the called terminal over the SIP network. There are several cases as follows.

In the first case, the called terminal pre-sets an always-on video communication, so the calling terminal may directly establish the video communication with the called terminal over the SIP network. The video communication is implemented between the calling and called terminals.

In the second case, the called terminal does not pre-set the always-on video communication, so the user of the called terminal is required to determine whether to accept this video call. After the user accepts the video call, the calling terminal establishes the video communication with the called terminal over the SIP network. Then the video communication is implemented between the calling and called terminals. If the user using the called terminal determines not to accept this video call, this video call fails and the calling terminal prompts this video call failure information to the user of the calling terminal.

In the third case, the calling terminal fails to establish the video call with the called terminal over the SIP network (possibly due to the SIP network), then the calling terminal prompts this video call failure information to the user of the calling terminal and continues this voice call.

Fig. 8 illustrates a process of implementing a video call between a calling terminal and a called terminal according to an embodiment of the present invention. In this embodiment, both the voice communication function and the video communication function are integrated in one terminal. The specific steps are as follows.

Step 801: The calling terminal dials a called number of the called terminal in a voice communication network. A switch in the voice communication network analyzes the number, determines a SoftSwitch which is on the route to the called terminal, and relays a call, which carries a calling number of the calling terminal in the voice communication network, to the SoftSwitch.

Step 802: After receiving the call, the SoftSwitch sends a query message, which carries the calling number and is used to query a video binding service, to an SHLR of the same administration office.

Step 803: The SHLR determines that the calling terminal has subscribed to the video binding service according to the stored subscription information for the video binding service, and returns to the SoftSwitch a video calling number in a SIP network corresponding to the stored calling number.

Step 804: The SoftSwtich relays the call to the called terminal. The calling and called terminals enter voice communication state.

In the process of relaying the call to the called terminal, if the calling and called terminals do not belong to the same administration office, then the call is required to go through a SoftSwitch to which the called terminal belongs before going through a relay gateway and a switch to which the called terminal belongs. If the calling and called terminals belong to the same administration office, then the call is required to go through the relay gateway and the switch to which the called terminal belongs only.

Step 805: After the successful relay of the voice call between the calling and called terminals or in the process of this relay, the SoftSwitch sends a video binding service registration callback to the calling terminal over the SIP network. The callback carries the calling number, the original called number (which is the called number used in this voice communication) and the video calling number identified by the video binding service.

The callback is relayed to the calling terminal over the SIP network. After the calling terminal has registered the video binding service having the video calling number (the calling terminal may perform the registration by accessing the SIP network through a modem), a message for releasing this callback is returned to the SoftSwitch.

At this moment, the calling terminal monitors the states of getting access to the SIP network, that is to say, the calling terminal records the states of online and registration.

The video calling number identified by the video binding service may be *56 + the video calling number, that is to say, the video binding service is identified as an access code *56. This callback is a virtual call used to provide the calling and called numbers of the voice communication to the calling terminal having the video calling number. The calling terminal establishes the video communication over the SIP network according to the calling and called numbers of the voice communication. The video binding service may be used to identify the video calling number in order to identify the virtual call.

Step 806: The calling terminal initiates the video call to the SoftSwitch to which it belongs over the SIP network. The call may be an invite (INVITE) message carrying a video binding service identifier.

Step 807: After receiving the INVITE message, the SoftSwitch to which the calling terminal belongs triggers the video binding service, and initiates the video call to the called terminal after replacing the carried video binding service identifier with the original called number (which is the called number used in this voice communication).

In this step, if the SoftSwitch is not the SoftSwitch to which the called terminal belongs, the INVITE message is sent to the called terminal via the SoftSwitch to which the called terminal belongs.

Step 808: The SoftSwitch to which the calling terminal belongs sends a query message for querying the video binding service of the called terminal to the SHLR of the same administration office. The message carries the original called number (which is the called number used in this voice communication). According to the stored subscription information for video binding service, the SHLR determines that the called terminal has subscribed to the video binding service, and returns to the SoftSwitch the video called number in SIP network corresponding to the stored original called number.

In this step, if the SoftSwitch is not the SoftSwitch to which the called terminal belongs, the subscription information for video binding service of the called terminal may not be stored in the SHLR of the same administration office. The SoftSwitch is required to interchange messages with a SoftSwitch to which the called terminal belongs, so that the SoftSwitch to which the called terminal belongs obtains the corresponding video called number from the SHLR of the same administration office and provides the corresponding video called number to the SoftSwitch to which the calling terminal belongs.

Step 809: In the SIP network, the SoftSwtich to which the calling terminal belongs calls the called terminal by using the video called number, that is to say, the SoftSwtich sends an INVITE message carrying the video called number to the called terminal (when the SoftSwitch to which the calling terminal belongs and the SoftSwtich to which the called terminal belongs are different entities, the INVITE message is also sent via the SoftSwtich to which the called terminal belongs). When the called terminal returns a successful reply, the calling terminal determines that it has successfully established the video communication with the called terminal over the SIP network, and then the calling terminal performs the video communication with the called terminal over the SIP network. When the called terminal fails to get access to the SIP network or does not accept this video communication, the called terminal does not return a reply or returns a failure reply, and the calling terminal fails to establish the video communication with the called terminal over the SIP network.

In the case that the called terminal cannot get access to the SIP network, a timer may be set up when the SoftSwtich to which the called terminal belongs (it may be the same entity as or different entities from the SoftSwtich to which the calling terminal belongs) sends the INVITE message. If no reply is received until the timer reaches a set value, the SoftSwtich to which the called terminal belongs resends the INVITE message or determines that the calling terminal fails to establish the video communication with the called terminal over the SIP network.

Step 810: A process of switching from the video communication to the voice communication is performed by the calling terminal. The calling terminal sends over the SIP network a release (BYE) message which carries the video calling number to the SoftSwitch to which the calling terminal belongs, to request to release the video call and carry the video calling number. After receiving the BYE message, the SoftSwitch breaks down the video communication established between the calling terminal and the called terminal over the SIP network according to the video calling number.

In this step, when breaking down the video communication, the registration information registered when the calling terminal got access to the SIP network in step 805 will not be deregistered.

Step 811: The calling terminal breaks down the voice communication with the called terminal over the voice communication network.

When breaking down the voice communication with the called terminal, the calling terminal is required to send a transient deregistration call carrying the video calling number to the SoftSwitch to which the calling terminal belongs over the SIP network, and the SoftSwtich clears the registration information of the calling terminal.

The method in Fig. 8 describes the process for the calling terminal to initiate the video communication. While the calling and called terminals are performing the voice communication, the called terminal may also initiate the video communication process in the same way as the calling terminal that initiates the video communication.

In the embodiments of present invention, the video communication function and voice communication function of the terminal may also be implemented on two separate entities instead of being integrated onto the same entity. In this case, steps 801-804 are performed by the calling and called entities with the voice communication function. In step 805, when performing a virtual call, the calling entity with the voice communication function is required to virtually call the calling entity with the video communication function. Steps 806-810 are substantially performed by the calling and called entities with the video communication function. Steps 11 is performed by the calling and called entities with the voice communication functions.

In the embodiments of the present invention, the SoftSwitch to which the calling terminal belongs for controlling the voice communication process and the SoftSwitch to which the calling terminal belongs for controlling the video communication process may also be two different entities instead of being the same entity. Similarly, the SoftSwitch to which the called terminal belongs for controlling the voice communication process (may be the same or different entity as or from the SoftSwitch to which the calling terminal belongs) and the SoftSwitch to which the called terminal belongs for controlling the video communication process (may be the same entity as or different entities from the SoftSwitch to which the calling terminal belongs) may also be two different entities instead of being the same entity.

In the embodiment of present invention, when the voice communication network is a PSTN network, each of the calling and the called terminals may be a PSTN terminal with the video communication function, or may be a PSTN terminal and a video communication terminal. When the voice communication network is a mobile communication network, each of the calling and the called terminals may be a mobile terminal with the video communication function, or may be a mobile terminal and a video communication terminal.

The following illustrate the information interchanging process for implementing the video call between the calling terminal and the called terminals, taking the system described in Fig. 1 and Fig. 2 as examples, respectively.

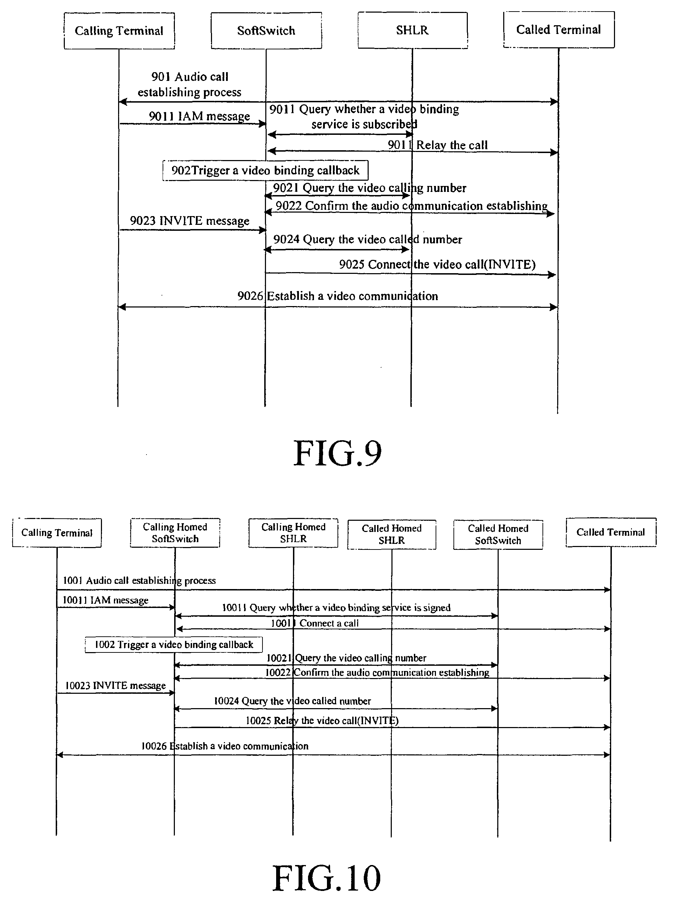

Fig. 9 shows the information interchanging process for implementing the video call between a calling terminal and a called terminal, taking the system described in Fig. 1 as an example. Both the calling and the called terminals have subscribed to the video binding service, both the calling and the called terminal have the voice communication function and the video communication function, that is to say, in this case a convergence terminal calls another convergence terminal and the calling and the called terminals are administrated by a same SoftSwitch. The specific steps are as follows.

Step 901: The SoftSwitch receives a call establishing message sent by the calling terminal over the voice communication network, checks the configurations of a calling relay gateway and the calling terminal, queries an SHLR about whether the calling terminal has subscribed to a video binding service and relays the call to the called terminal over the voice communication network.

The specific process of step 901 is as follows.

Step 9011: The SoftSwitch receives an initial address message (IAM) sent by the calling terminal over the voice communication network, performs the number analysis according to the prior art to obtain a calling number, queries the SHLR whether the calling number has subscribed to the video binding service. The SHLR returns a query response message indicating that the calling terminal has subscribed to the video binding service.

In this step, it is require extending the interface between the SoftSwitch and the SHLR.

The SoftSwitch relays the call to the called terminal over the voice communication network, that is, reports an off-hook signal to the called terminal through an ANM message. After receiving a reply signal, the SoftSwitch connects the calling and the called terminals, that is, performs a voice communication process between the calling and called terminals.

Step 902: The SoftSwtich triggers a video binding callback service with respect to the video calling number. Because the interface of the called terminal is supported at the same time, a video binding callback service is required to be set to the video called number corresponding to the called number. The process will not be described in detail as it is the same as the service of triggering the video binding callback.

The specific process of step 902 is as follows.

Step 9021: The SoftSwitch queries the SHLR for the video calling number corresponding to the calling number through inserting a video binding service identifier before the calling number. To insert the video binding service identifier before the calling number is to form a query message which carries the calling number and is used for querying the video binding service.

After this step, the SoftSwtich sends a video binding service registration callback, which carries the calling number, the original called number (which is the called number used in this voice communication) and the video calling number identified by the video binding service, to the calling terminal over the SIP network.

The callback is relayed to the calling terminal over the SIP network. After the calling terminal has registered the video binding service having the video calling number, a message for releasing this callback is returned to the SoftSwtich. In this way, The SoftSwitch provides the calling and called numbers used in this voice communication to the calling terminal with the video communication function.

Step 9022: The SoftSwitch determines that the communication between the calling terminal and the called terminal over the voice communication network has been established in step 901.

Step 9023: The calling terminal sends a video switching command, that is to say, the calling terminal sends over the SIP network an INVITE message to the SoftSwitch which triggered the video binding callback.

Step 9024: The SoftSwitch queries the SHLR for the video called number corresponding to the called number according to the video binding service identifier and the called number.

Step 9025: The SoftSwitch sends an INVITE message carrying the video called number to the called terminal over the SIP network. The called terminal replies after receiving the message over the SIP network.

Step 9026: The SoftSwitch sends a message carrying the video calling number to the calling terminal over the SIP network, and establishes the video communication between the calling terminal and the called terminal over the SIP network after receiving the reply message from the calling terminal.

In step 9011 of Fig. 9, the specific process for querying the SHLR whether the calling number has subscribed to the video binding service is as follows.

In the SHLR, if the calling terminal has not registered the video binding service, the SHLR may directly return to the SoftSwtich a message indicating that the calling terminal has not registered the video binding service. The SoftSwitch performs a common call process and does not perform subsequent steps relating to the video binding service.

In the SHLR, if the calling terminal has registered the video binding service and the value added services, SHLR returns corresponding service identifiers to the SoftSwitch according to a configured priority sequence of the services. The SoftSwitch performs processes for related services. When receiving the video calling number, the SoftSwitch analyzes the video calling number and performs the subsequent process relating to the video binding service.

The specific process of step 9021 in Fig. 9 is as follows:
If the query message received by the SHLR does not carry the video binding identifier and the calling number, the call is determined to be a voice communication network call. The video binding service identifier is not returned in response to a query corresponding to the calling number.

In the SHLR, if the calling terminal has not registered the video binding service, after the SHLR returns a message indicating that the calling terminal has not registered the video binding service, the SoftSwitch releases the registration resource for the calling terminal in the SIP network. If the calling terminal has registered the video binding service, after the SHLR returns the video calling number, the SoftSwitch performs the subsequent process relating to the video binding service.

The specific process of step 9023 in Fig. 9 is as follows.

The subsequent process is not performed if the calling terminal does not send the video switching command, and is performed if the calling terminal sends the video switching command.

The specific process of step 9024 in Fig. 9 is as follows.

If the query message received by the SHLR does not carry the video binding identifier and the called number, the video binding service identifier is not returned in response to the query corresponding to the called number.

In the SHLR, if the called terminal has not registered the video binding service, the SHLR returns a query response message indicating that the called terminal has not registered the video binding service, and the SoftSwitch releases the registration resource for the called terminal in the SIP network. If the called terminal has registered the video binding service, after the SHLR returns the video called number, the SoftSwitch performs the subsequent process relating to the video binding service.

The specific process of step 9025 in Fig. 9 is as follows.

If the called terminal in the SIP network is busy or fails to register, the SoftSwitch sends a corresponding reason value to the calling terminal.

If the called terminal does not support the video binding service, the SoftSwitch directly releases this video call. The release reason indicates that the called terminal does not support the video call.

If the SoftSwtich receives a message indicating that the called terminal has not registered the video binding service or a busy and wait message, the SoftSwtich starts a timer. The above process is repeated after the timer times out. The called terminal is called in the SIP network for a set number of times, for example three times, every 10 seconds. If it fails after the whole process, a failure is prompted.

If the SoftSwtich receives a message indicating that the called terminal does not support the video call, the registration resource for the called terminal in the SIP network is released.

If in this process, the calling terminal sends a video communication failure message over the SIP network, the video call is terminated and a video call failure is prompted.

Fig. 10 shows the information interchanging process for implementing the video call between the calling terminal and the called terminal, taking the system described in Fig. 2 as an example. Both the calling and called terminals have subscribed to the video binding service, and both the calling and called terminal have the voice communication function and the video communication function, that is to say, in this case a convergence terminal calls another convergence terminal and the calling and the called terminals are administrated by different SoftSwitches. The specific steps are as follows.

Step 1001: The SoftSwtich to which the calling terminal belongs receives an IAM message sent by the calling terminal over the voice communication network, performs the number analysis according to the prior art, and queries the SHLR belonging to the same administration office whether the calling number has subscribed to the video binding service. The SHLR returns a query response message indicating that the calling terminal has subscribed to the video binding service.

In this step, the interface between the SoftSwitch to which the calling terminal belongs and the SHLR of the same administration office is required to be extended.

The SoftSwitch to which the calling terminal belongs relays the call to the called terminal via the SoftSwitch to which the called terminal belongs. That is to say, the SoftSwitch to which the calling terminal belongs reports an off-hook signal to the called terminal through an ANM message. After the SoftSwitch to which the calling terminal belongs receives the reply signal sent by the called terminal via the SoftSwitch to which the called terminal belongs, the calling and the called terminals are connected via the SoftSwitches to which the calling and called terminals belong, that is to say, the voice communication process between the calling and called terminals is performed.

Step 1002: The SoftSwtich to which the calling terminal belongs triggers a video binding callback service with respect to the video calling number. Because the interface of the called terminal is supported at the same time, a video binding callback service is required to be set to the video called number corresponding to the called number. The process will not be described in detail as it is the same as the service of triggering a video binding callback.

The specific process of step 1002 is as follows.

Step 10021: The SoftSwitch to which the calling terminal belongs queries the SHLR administrating the calling terminal through the video binding service identifier and the calling number. To query the SHLR administrating the calling terminal through the video binding service identifier and the calling number is to send a query message which carries the calling number and is used to query the video binding service. Since there is no video calling number corresponding to the calling number in the SHLR administrating the calling terminal, it is required to query the SHLR to which the called terminal belongs for the corresponding video calling number.

After this step, the SoftSwitch sends a video binding service registration callback, which carries the calling number, the original called number (that is the called number used in this voice communication) and the video calling number identified by the video binding service, to the calling terminal over the SIP network.

This callback is relayed to the calling terminal over the SIP network. A message for releasing this callback is returned to the SoftSwitch after the calling terminal has registered the video binding service having the calling number. In this way, the SoftSwitch provides the calling and called numbers used in this voice communication to the calling terminal which has the video communication function.

Step 10022: The SoftSwitch to which the calling terminal belongs determines that the communication between the calling terminal and the called terminal over the PSTN network has been established via a SoftSwitch to which the called terminal belongs in step 1001.

Step 10023: The calling terminal sends a video switching command. That is to say, the calling terminal sends over the SIP network an INVITE message to the SoftSwitch to which the calling terminal belongs, which triggered the video binding callback.

Step 10024: The SoftSwitch to which the calling terminal belongs queries, via the SoftSwitch to which the called terminal belongs, the SHLR administrating the called terminal for the video called number corresponding to the called number through the video binding service identifier and the called number.

Step 10025: The SoftSwitch to which the calling terminal belongs sends the INVITE message carrying the video called number over the SIP network via the SoftSwitch to which the called terminal belongs. The called terminal replies after receiving the message over the SIP network.

Step 10026: The SoftSwitch to which the calling terminal belongs sends a message carrying the video calling number over the SIP, and establishes the video communication between the calling terminal and the called terminal over the SIP network after receiving the reply message from the calling terminal.

The specific process for querying the SHLR whether the calling number has subscribed to the video binding service in step 1001 is as follows.

In the SHLR to which the calling terminal belongs, if the calling terminal has not registered the video binding service, then the SHLR may directly return a message indicating that the calling terminal has not registered the video binding service to the SoftSwitch to which the calling terminal belongs. The SoftSwitch to which the calling terminal belongs performs a common call process and does not perform the subsequent flow relating to the video binding service.

In the SHLR to which the calling terminal belongs, if the calling terminal has registered the video binding service and the value added services, then the SHLR returns corresponding service identifiers to the SoftSwitch to which the calling terminal belongs according to a configured priority sequence of the services, the SoftSwitch to which the calling terminal belongs performs processes for related services. When receiving the video calling number, the SoftSwitch to which the calling terminal belongs analyzes the video calling number and performs the subsequent process relating to the video binding service.

The specific process in step 10021 is as follows.

If the query messages received by the SHLR to which the calling terminal belongs and the SHLR to which the called terminal belongs do not carry the video binding identifier and the calling number, the call is determined to be a voice communication network call. The video binding service identifier is not returned in response to the query corresponding to the calling number.

In the SHLR to which the calling terminal belongs and the SHLR to which the called terminal belongs, if the calling terminal has not registered the video binding service, a message indicating that the calling terminal has not registered the video binding service is returned, and the SoftSwitch to which the calling terminal belongs releases the registration resource for the calling terminal in the SIP network. If the calling terminal has registered the video binding service, after the video calling number is returned, the SoftSwitch to which the calling terminal belongs performs the subsequent process relating to the video binding service.

The specific process of step 1023 in Fig. 10 is as follows.

If the calling terminal does not send the video switching command, the subsequent process is not performed.

The specific process of step 1024 in Fig. 10 is as follows.

If the query message received by the SHLR to which the called terminal belongs does not carry the video binding identifier and the called number, the video binding service is not returned in the response to the query corresponding to the called number.

In the SHLR to which the called terminal belongs, if the called terminal has not registered the video binding service, the SHLR returns a message indicating that the called terminal has not registered the video binding service, and the SoftSwitch to which the called terminal belongs releases the registration resource for the called terminal in the SIP network. If the called terminal has registered the video binding service, after the SHLR returns the video called number, the SoftSwitch to which the called terminal belongs performs the subsequent process relating to the video binding service.

The specific process of step 10025 in Fig. 10 is as follows.

If the called terminal in the SIP network is busy or fails to register, the SoftSwitch to which the called terminal belongs sends a corresponding reason value to the calling terminal over the SIP network via the SoftSwitch to which the calling terminal belongs.

If the called terminal does not support the video binding service, the SoftSwitch to which the called terminal belongs directly releases the video call. The release reason shows that the called terminal does not support the video call.

If the SoftSwitch to which the called terminal belongs receives a message indicating that the called terminal has not registered the video binding service or a busy and wait message, etc., the SoftSwitch starts a timer. After the timer times out, the above process for calling the called terminal in the SIP network is repeated for a set number of times, for example three times, every 10 seconds. If it fails after the whole process, a failure is prompted.

If the SoftSwitch to which the called terminal belongs receives a message indicating that the called terminal does not support the video call, the registration resource for the called terminal in the SIP network is released.

If the calling terminal sends a video communication failure message over the SIP network in this process, the video call is terminated and the video call failure is prompted.

According to embodiments of the present invention, the subscription information for video binding service of the calling and called terminals may also be stored in a configured data server or a database in the SoftSwitch rather than in the SHLR. In this case, it is required to set up an extended interface between the SoftSwitch and the configured data server or the database in the SoftSwitch, in order for the SoftSwitch to obtain the subscription information for video binding service of the calling and called terminals.

It may be seen from Fig. 9 and Fig. 10 that in order to enable the SoftSwitch to query for the subscription information for video binding service of the calling and called terminals stored in a SHLR, it is required to extend the interface between the SoftSwitch and the SHLR to support the querying of subscription information for video binding service.

Two methods for extending the interface between the SoftSwitch and the SHLR in order to support the querying of the subscription information for video binding service according to embodiments of the present invention are described in detail respectively below.

### The first method

When the calling terminal performs a video call to the called terminal over the SIP network, since the video call between the calling terminal and the called terminal is a SIP network call, it is required to query the calling and called subscription services according to the existing specification of the SIP network. The SHLR returns the calling and called terminals' subscription service identifiers, including the calling and called terminals' video binding service identifiers and a video calling number (At this time, it is required to query for a video called number. If the calling and called terminals belong to different SHLRs, the video called number is acquired by MAP + interchanging information between the SoftSwitch to which the calling terminal belongs and the SoftSwitch to which the called terminal belongs). For the called terminal, the video binding service query may not be pre-performed in the process of the call. After the SHLR completes the subscription service queries for all of its administrated terminals, the SHLR does not return the video called number of the called terminal. If the SoftSwitch initiates a registration/deregistration/video switching call, the SoftSwitch may notify the SHLR of the video binding service identifiers. The SHLR directly returns the video calling and called numbers and does not perform other queries.

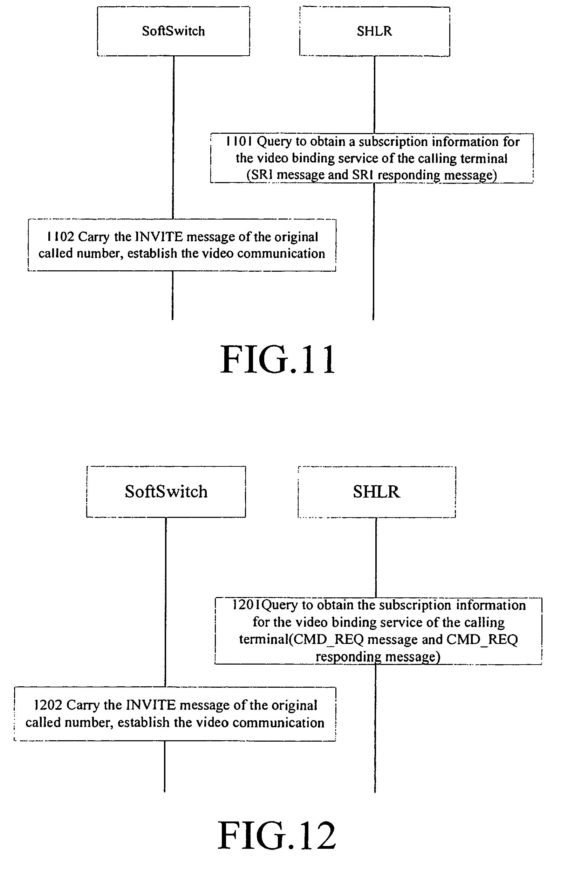

Fig. 11 is a flowchart of a first method for querying the subscription information for video binding service stored in an SHLR according to an embodiment of the present invention. The specific steps of this method are as follows.

Step 1101: A SoftSwtich queries the SHLR for the subscription information for video binding service of a calling terminal. The query message carries a calling number.

The specific process of step 1101 is as follows.
a) The SHLR is triggered to obtain a calling "SHLR selection source code" and a called "SHLR selection code" according to the prior art. The "SHLR selection source code" may be obtained from a calling source table stored in the SHLR. Existing techniques of the SIP network are employed except that a calling type service i.e. the video binding service, is added.
b) If the SHLR returns a video binding service identifier which indicates that the calling terminal has subscribed to the video binding service, the SoftSwitch performs a number analysis and configures the video binding service identifier to be a video binding right access code in the number analysis process. Then the SoftSwitch uses the called number to relay.
c) If the SHLR does not return the video binding service identifier, this indicates that the calling terminal has not subscribed to the video binding service.
d) Performing other exception handles which are the same as service processes in the SIP network in prior art.

Step 1102: During the voice call between the calling terminal and the called terminal over the voice communication network, the calling terminal sends an INVITE message carrying the original called number to the SoftSwitch over the SIP network, to call the called terminal over the SIP network and establish the video communication.

The specific steps of step 1102 are as follows.
a) The SoftSwitch accesses the SHLR.
b) By invoking a SHLR query on a "called video query interface" (i.e., the SHLR query is triggered according to the "SHLR selection source code" and the "SHLR selection code" obtained in a) of step 1101), the video called number of the called terminal is obtained. It is required to carry the calling and called numbers and the video binding identifier in the query message, so as to ensure that the SHLR only returns the video calling and called numbers and does not perform query for other services.

If the SHLR returns the video calling and called numbers, the video communication is established according to the numbers; and if the SHLR does not return the video calling and called numbers, the video communication is failed to establish.

The following is required to be implemented in the SHLR, in order to implement the embodiment of the present invention.
1: A corresponding relationship between the number and the video number should be stored. For example, a video binding service table, in which the calling and called numbers correspond to the video calling and called numbers, should be stored. The items in the table may be added, deleted, modified and queried.
2: After receiving the message carrying the calling and called numbers and the video binding service identifier sent by the SoftSwitch, the stored corresponding relationship is queried and the query result of the video called number corresponding to the called number is obtained.
3: The SHLR sends the query result to the SoftSwitch by means of a protocol for intercommunicating messages with the SoftSwitch, for example, the protocol is MAP + encapsulation. If no result is obtained by this query, a query failure is notified using the MAP+ message.

According to embodiments of the present invention, the interface between the SoftSwitch and the SHLR is Send Route Information (SRI), the query message is a SRI message with a direction from the SoftSwitch to the SHLR, and the query response message is an SRI Acknowledgement (ACK) message with a direction from the SHLR to the SoftSwitch.

The definition of the SRI message is shown in Table 1.

**Table 1**

| Sequence number | Field definitions | | | | Remarks |
|---|---|---|---|---|---|
| | Msisdn (called number) | interrogation Type (query type) | RedirectingLR N (query service identifier) | callingLRN (query service identifier of the calling party) | |
| 1 | Specific access code + called logic number | 30\200 | Carrying this field when necessary | Carrying this field when necessary | The calling party initiates the video binding. |
| 2 | Specific access code + called logic number | 30\200 | Carrying this field when necessary | Carrying this field when necessary | The called party initiates the video binding. Since the called terminal performs the video access, the SHLR is required to perform a specific video process for the called terminal according to the specific access code. |

The definition of the returned result SRI ACK is shown in Table 2.

**Table 2**

| Sequence number | Field definitions | | | | Remarks |
|---|---|---|---|---|---|
| | OperateType (returned reason value) | callingOrRedirectingDN (video calling number) | calledLRN (called LRN) | callinglPNumber (calling IP binding video number) | |
| 1 | 150 | video number corresponding to Calling IP video binding user | null | null | The SHLR determines that the calling party is an IP video user according to the specific field before the called number in the query, and returns a corresponding binding number. |
| 2 | 151 | null | Called video number corresponding to the called terminal | null | The SHLR determines that the called party is an IP video user according to the specific field before the called number in the query, and returns a corresponding binding number. |
| 3 | 152 | null | null | null | The SHLR determines that the called terminal is not a video user according to the specific field before the called number in querying |

The embodiment employs the extended SHLR interface to implement the binding service query between the SoftSwitch and the SHLR. The interface protocols in the SIP network are kept unchanged, and the interchanging times between the SoftSwitch and the SHLR are reduced.

### The second method

According to an embodiment of the present invention, in order to enable the SoftSwitch to query the subscription information for video binding service stored in the SHLR, a private transfer control protocol (TCP) interface may be set between the SoftSwitch and the SHLR to support the video binding service. The process will be described in details below.

When the calling terminal calls the called terminal, since the call between the calling terminal and the called terminal is a SIP network call, a query for the calling service is performed in the SHLR according to the existing specification of the SIP network. The SHLR sequentially returns the calling services of the calling terminal, including a calling video binding service, according to the stored subscription information for the calling services of the calling terminal. At this time, the SHLR is not required to return the video calling number, and no video binding service query is performed with respect to the called terminal. The SHLR does not return the video called number after the SHLR has completed queries for all of the called subscription services in the SIP network. If the SoftSwitch wants to trigger a registration/deregistration/video switching call, the SoftSwitch sends a query message to the SHLR through a private TCP interface. The SHLR returns the video calling and called numbers without performing queries for other SIP network services of the calling and called terminals.

Fig. 12 is a flowchart of a second method for querying the subscription information for video binding service stored in an SHLR according to an embodiment of the present invention. The specific steps are as follows.

Step 1201: The SoftSwitch queries, through an existing interface in the SIP network, the SHLR whether the calling terminal has subscribed to a video binding service.

The specific process is as follows.
a) In order to trigger the SHLR according to prior art, the calling "SHLR selection source code" and the called "SHLR selection code" are required. The "SHLR selection source code" is obtained from the calling source table stored in the SHLR. Existing techniques of the SIP network are employed except that a calling type service is added.
b) If the SHLR returns a video binding service identifier which indicates that the calling terminal has subscribed to the video binding service, the SoftSwitch performs a number analysis and configures the video binding service identifier to be a video binding right access code in the number analysis process. Then the SoftSwitch uses the called number to relay.
c) If the SHLR does not return the video binding service identifier, this indicates that the calling terminal has not subscribed to the video binding service.
d) Performing other exception handles which are same as service processes in the SIP network in the prior art.

Step 1202: During the voice call between the calling terminal and the called terminal over the voice communication network, the calling terminal sends an INVITE message to the SoftSwitch over the SIP network, to call the called terminal over the SIP network and establish the video communication.

The specific steps of step 1202 are as follows.
a) The SoftSwitch gets access to the SHLR.
b) The SoftSwitch sends, through a TCP connection, a command to request to query the video numbers of the calling terminal and the called terminal.
c) The SHLR returns to the SoftSwitch a response carrying the video numbers of calling and the called terminals.

The following is required to be implemented in the SHLR, in order to implement the embodiment of the present invention.
1. A corresponding relationship between the number and the video number should be stored. For example, a video binding service table, in which the calling and called numbers correspond to the video calling and called numbers, should be stored. The items in the table may be added, deleted, modified and queried.
2. After receiving the message carrying the calling and called numbers and the video binding service identifier sent by the SoftSwitch, the stored corresponding relationship is queried and the query result of the video called number corresponding to the called number is obtained.
3. The SHLR sends the query result to the SoftSwitch by means of a protocol for intercommunicating messages with the SoftSwitch, for example, the protocol is MAP + encapsulation. If no result is obtain by this query, a query failure is notified using MAP+ message.

In the embodiment, the query request command sent through the TCP connection is defined as CMD_REQ with a direction from the SoftSwitch to the SHLR. The response message for the query request command sent through the TCP connection is defined as CMD_RACK with a direction from the SHLR to the SoftSwitch.

The definition of CMD_REQ is shown in Table 3:

**Table 3**

| Sequence number | Field definitions | | | | Remarks |
|---|---|---|---|---|---|
| 1 | CMD | 0 | CMD_REQ | | |
| 2 | RESLUT | 255 | Invalid value | | |
| 3 | Calling Number | Number | The number for which a query is requested | | |

The definition of CMD_ACK is shown in Table 4.

**Table 4**

| Sequence number | Field definitions | | |
|---|---|---|---|
| 1 | CMD | 1 | CMD_ACK |
| 2 | Result | 0: query success | Query result indication |
| | | 1:absence | |
| | | 2: query failure | |
| 3 | Calling Number | number | Returned video number |
| 4 | 152 | null | null |

In the embodiment, the query for the binding service from the SoftSwitch to the SHLR is done by the private TCP interface. This implementation is easier and well extendable.

According to embodiments of the present invention, the video communication may be completed using an IP multimedia subsystem (IMS). At this time, the SHLR may be replaced with a home subscriber server (HSS) which is adapted to store the IMS user information. The SoftSwitch may be replaced with an IMS serving call session control function/application server (S-CSCF/AS). The S-CSCF, which performs the session control function, is the core control function in the IMS core network. The S-CSCF is responsible for a UE's registration authentication and session control, for performing the basic session control and routing function for a UE with respect to the calling side and the called side IMSs, and for completing a value added service routing triggering and a service control interchanging to an AS when conditions are satisfied according to IMS trigger rules for the user subscription.

When the IMS completes the video communication, the HSS, whose functions are similar to the SHLR in the SIP network, is adapted to store the subscription information for video binding service of a terminal, and provide the information to the S-CSCF/AS when the S-CSCF/AS performs a query; the S-CSCF/AS, whose functions are similar to the SoftSwitch in the SIP network, is adapted to query the HSS for the stored subscription information for video binding service of the terminal and establish video communication between the calling and called terminals according to the information obtained from the query. All of the above embodiments used in the SIP network for implementing the video communication are suitable for the IMS. The only difference lies in the entity names caused by different network in which the embodiments are applied.

In the present invention, the SoftSwitch and the S-CSCF/AS may be collectively referred to as a network device, which functions to query the subscription information for video binding service of the terminal and establish the video communication between the calling and called terminals according to the information obtained from the query.

The description illustrated above is only preferred embodiments of the present invention and is not intended to limit the protected scope of the present invention.

## Claims

1. A system for implementing a video communication in the process of a voice communication in which a video service is bound, comprising a terminal, a soft switch and a unit for storing subscription information for a video binding service of the terminal, wherein,
the terminal is adapted to initiate, over the voice communication network, a voice call to the soft switch, and send, over a video communication network, to the soft switch a call request for video switching;
the soft switch is adapted to establish, over the voice communication network, the voice call after receiving the voice call from the terminal, and establish a video communication according to the subscription information for the video binding service of the terminal obtained by querying the unit for storing the subscription information for the video binding service of the terminal, after receiving, over the video communication network, the call request for video switching;
the unit for storing the subscription information for the video binding service of the terminal is adapted to send the queried subscription information for the video binding service of the terminal to the soft switch; and
wherein after the successful relay of the voice call between the calling and called terminals or in the process of this relay, the soft switch is further adapted to send a video binding service registration callback to the calling terminal over the session initiation protocol, SIP network, wherein the callback carries a calling number, an original called number, which is the called number used in this voice communication, and a video calling number identified by the video binding service.

2. The system of claim 1, wherein the unit for storing subscription information for the video binding service of the terminal is a storage module, and the storage module is a smart home location register, SHLR, or a home subscriber server, HSS.

3. The system of claim 2, wherein:
the terminal is adapted to initiate the voice call and its opposite terminal are in different administration offices;
the soft switch comprises a soft switch to which the terminal belongs and a soft switch to which the opposite terminal belongs;
the SHLR or HSS comprises the SHLR or HSS that the terminal belongs to, the SHLR or HSS being adapted to store the subscription information for the video binding service of the terminal, and the SHLR or HSS that the opposite terminal belongs to, the SHLR or HSS being adapted to store the subscription information for the video binding service of the opposite terminal, wherein,
the soft switch to which the terminal belongs is adapted to query the SHLR or HSS to which the terminal belongs, so as to obtain the subscription information for the video binding service of the terminal;
the soft switch to which the opposite terminal belongs is adapted to query the SHLR or HSS to which the opposite terminal belongs, so as to obtain the subscription information for the video binding service of the opposite terminal.

4. The system of claim 1, 2, or 3, wherein the soft switch comprises a network device adapted to establish the voice call and a network device adapted to establish the video communication.

5. The system of claim 1, 2, or 3, wherein the terminal comprises a terminal adapted to send the call request for video switching and a terminal adapted to send the voice call.

6. The system of claim 1 or 3, wherein:
the system further comprises a switch and a relay gateway in the voice communication network; and
the terminal is adapted to initiate, through the switch and the relay gateway sequentially, the voice call to the soft switch.

7. The system of claim 1 or 3, wherein the system further comprises an access gateway, AG,
the terminal is adapted to initiate, through the AG, the voice call to the soft switch.

8. The system of claim 1, wherein the system further comprises a short message centre, a multimedia message centre or a video communication network proxy connected to the soft switch respectively, adapted to provide, through the soft switch, a short message, a multimedia message and a video communication network value added service to the terminal.

9. A method for implementing a video communication in the process of a voice communication in which a video service is bound, wherein the method comprises:
getting access, by a calling terminal and a called terminal, to the voice communication network and a video communication network respectively; and
establishing a video communication between the calling and called terminals over the video communication network, during a voice communication between the calling and called terminals over the voice communication network;
wherein the accessing, by the calling terminal and the called terminal, the video communication network further comprises:
pre-storing subscription information for a video binding service in a storage module at the video communication network side; and
during the voice communication between the calling and called terminals, accessing, by a soft switch of the video communication network, the storage module to obtain the subscription information for the video binding service of the calling and called terminals, and enabling the calling and called terminals to get access to the video communication network according to the subscription information for video binding service; and
sending, after the successful relay of the voice call between the calling and called terminals or in the process of this relay, by the soft switch, a video binding service registration callback to the calling terminal over the session initiation protocol, SIP, network, wherein the callback carries a calling number, an original called number, which is the called number used in this voice communication, and a video calling number identified by the video binding service.

10. The method of claim 9, wherein the enabling the calling and called terminals to get access to the video communication network according to the subscription information for video binding service further comprises:
the subscription information for video binding service stored in the storage module at the video communication network side is video numbers corresponding to numbers of the calling and called terminals in the voice communication network;
after the calling terminal or the called terminal sends a video communication switching message, which carries a video binding service identifier and a calling number or a called number, to the video communication network, determining, by the video communication network, to perform the video communication between the calling and called terminals, querying the storage module for the video numbers corresponding to the numbers of the calling and called terminals in the voice communication network, and establishing the video communication between the calling and called terminals.

11. The method of claim 10, wherein before sending the video communication message, the method further comprises:
querying, by the voice communication network, the storage module at the video communication network side to obtain the video number of the calling terminal or the called terminal, and performing a callback which carries the video number identified by the video binding service of the calling terminal or called terminal and the calling and called numbers in the voice communication network; and
registering the calling terminal or the called terminal with the video communication network according to the callback.

12. The method of claim 9, wherein the storage module stores the subscription information for the video binding service of the calling terminal and the video number corresponding to the number of the calling terminal in the voice communication network, and stores the subscription information for the video binding service of the called terminal and the video number corresponding to the number of the called terminal in the voice communication network.

13. The method of claim 9, wherein the storage module is coupled, through an extended storage module interface or a configured TCP interface, to a soft switch at the video communication network side; and
the video numbers corresponding to the numbers of the calling and called terminals in the voice communication network are queried through the extended storage module interface or the configured TCP interface.

14. The method of claim 12, wherein when the interface between the storage module and the soft switch at the video communication network side is the extended storage module interface, the video numbers corresponding to numbers of the calling and called terminals in the PSTN are queried through an SRI message;
when the interface between the storage module and the soft switch at the video communication network side is the TCP interface, the video numbers corresponding to numbers of the calling and called terminals in the PSTN are queried through a CMD message.

## Patentansprüche

1. System zum Implementieren einer Videokommunikation im Prozess einer Sprachkommunikation, wobei ein Videodienst gebunden wird, umfassend ein Endgerät, einen Soft-Switch und eine Einheit zum Speichern von Subskriptionsinformationen für einen Videobindedienst des Endgeräts, wobei
das Endgerät dafür ausgelegt ist, über das Sprachkommunikationsnetz eine Sprachverbindung mit dem Soft-Switch einzuleiten und über ein Videokommunikationsnetz eine Verbindungsanforderung zum Video-Switching zu dem Soft-Switch zu senden;
der Soft-Switch dafür ausgelegt ist, über das Sprachkommunikationsnetz die Sprachverbindung nach dem Empfang der Sprachverbindung von dem Endgerät herzustellen und eine Videokommunikation gemäß den Subskriptionsinformationen für den Videobindedienst des Endgeräts, die durch Abfragen der Einheit zum Speichern der Subskriptionsinformationen für den Videobindedienst des Endgeräts erhalten werden, herzustellen, nachdem über das Videokommunikationsnetz die Verbindungsanforderung zum Video-Switching empfangen wird;
die Einheit zum Speichern der Subskriptionsinformationen für den Videobindedienst des Endgeräts dafür ausgelegt ist, die abgefragten Subskriptionsinformationen für den Videobindedienst des Endgeräts, zu dem Soft-Switch zu senden; und
wobei der Soft-Switch nach dem erfolgreichen Weiterleiten der Sprachverbindung zwischen dem anrufenden und angerufenen Endgerät oder im Prozess dieser Weiterleitung ferner dafür ausgelegt ist, über das Netz des Session Initiation Protocol SIP ein Videobindedienst-Registrierungscallback zu dem anrufenden Endgerät zu senden, wobei das Callback eine anrufende Nummer, eine ursprüngliche angerufene Nummer, die die bei dieser Sprachkommunikation verwendete angerufene Nummer ist, und eine durch den Videobindedienst identifizierte Videoanrufnummer führt.

2. System nach Anspruch 1, wobei die Einheit zum Speichern von Subskriptionsinformationen für den Videobindedienst des Endgeräts ein Speichermodul ist und das Speichermodul ein Smart Home Location Register SHLR oder ein Home Subscriber Server HSS ist.

3. System nach Anspruch 2, wobei
das Endgerät dafür ausgelegt ist, die Sprachverbindung einzuleiten, und sich sein entgegengesetztes Endgerät in verschiedenen Administrationsstellen befindet;
der Soft-Switch einen Soft-Switch, zu dem das Endgerät gehört, und einen Soft-Switch, zu dem das entgegengesetzte Endgerät gehört, umfasst;
das SHLR oder der HSS das SHLR oder den HSS, wozu das Endgerät gehört, umfasst, wobei das SHLR oder der HSS dafür ausgelegt sind, die Subskriptionsinformationen für den Videobindedienst des Endgeräts zu speicherm, und das SHLR oder derm HSS, wozu das entgegengesetzte Endgerät gehört, fasst, wobei das SHLR oder der HSS dafür ausgelegt sind, die Subskriptionsinformationen für den Videobindedienst des entgegengesetzten Endgeräts zu speichern, wobei
der Soft-Switch, zu dem das Endgerät gehört, dafür ausgelegt ist, das SHLR oder den HSS, wozu das Endgerät gehört, abzufragen, um so die Subskriptionsinformationen für den Videobindedienst des Endgeräts zu erhalten; und
der Soft-Switch, zu dem das entgegengesetzte Endgerät gehört, dafür ausgelegt ist, das SHLR oder den HSS, wozu das entgegengesetzte Endgerät gehört, abzufragen, um so die Subskriptionsinformationen für den Videobindedienst des entgegengesetzten Endgeräts zu erhalten.

4. System nach Anspruch 1, 2 oder 3, wobei der Soft-Switch Folgendes umfasst: eine Netzeinrichtung, die dafür ausgelegt ist, die Sprachverbindung herzustellen, und eine Netzeinrichtung, die dafür ausgelegt ist, die Videokommunikation herzustellen.

5. System nach Anspruch 1, 2 oder 3, wobei das Endgerät Folgendes umfasst: ein Endgerät, das dafür ausgelegt ist, die Verbindungsanforderung für Video-Switching zu senden, und ein Endgerät, das dafür ausgelegt ist, die Sprachverbindung zu senden.

6. System nach Anspruch 1 oder 3, wobei
das System ferner einen Switch und ein Relais-Gateway in dem Sprachkommunikationsnetz umfasst; und
das Endgerät dafür ausgelegt ist, durch den Switch und das Relais-Gateway sequentiell die Sprachverbindung zu dem Soft-Switch einzuleiten.

7. System nach Anspruch 1 oder 3, wobei das System ferner ein Zugangs-Gateway AG umfasst und
das Endgerät dafür ausgelegt ist, durch das AG die Sprachverbindung zu dem Soft-Switch einzuleiten.

8. System nach Anspruch 1, wobei das System ferner jeweils mit dem Soft-Switch verbunden eine Kurznachrichtenstelle, eine Multimedianachrichtenstelle oder ein Videokommunikationsnetz-Proxy umfasst, die dafür ausgelegt sind, durch den Soft-Switch einen Kurznachrichten-, einen Multimedianachrichten- und einen Videokommunikationsnetz-Mehrwertdienst für das Endgerät bereitzustellen.

9. Verfahren zum Implementieren einer Videokommunikation im Prozess einer Sprachkommunikation, wobei ein Videodienst gebunden wird, wobei das Verfahren die folgenden Schritte umfasst:
Erhalten von Zugriff auf das Sprachkommunikationsnetz bzw. ein Videokommunikationsnetz durch ein anrufendes Endgerät und ein angerufenes Endgerät; und
Herstellen einer Videokommunikation zwischen dem anrufenden und angerufenen Endgerät über das Videokommunikationsnetz während einer Sprachkommunikation zwischen dem anrufenden und angerufenen Endgerät über das Sprachkommunikationsnetz;
wobei das Zugreifen auf das Videokommunikationsnetz durch das anrufende Endgerät und das angerufene Endgerät Folgendes umfasst:
Vorspeichern von Subskriptionsinformationen für einen Videobindedienst in einem Speichermodul auf der Videokommunikationsnetzseite; und
Zugreifen auf das Speichermodul durch einen Soft-Switch des Videokommunikationsnetzes während der Sprachkommunikation zwischen dem anrufenden und dem angerufenen Endgerät, um die Subskriptionsinformationen für den Videobindedienst des anrufenden und angerufenen Endgeräts zu erhalten, und Befähigen des anrufenden und angerufenen Endgeräts, Zugriff auf das Videokommunikationsnetz zu erhalten, gemäß den Subskriptionsinformationen für Videobindedienst; und
Senden eines Videobindedienst-Registrierungscallback über das Netz des Session Initiation Protocol SIP durch den Soft-Switch zu dem anrufenden Endgerät nach der erfolgreichen Weiterleitung der Sprachverbindung zwischen dem anrufenden und angerufenen Endgerät oder während dieser Weiterleitung, wobei das Callback eine anrufende Nummer, eine ursprüngliche angerufene Nummer, die die bei dieser Sprachkommunikation verwendete angerufene Nummer ist, und eine durch den Videobindedienst identifizierte Videoanrufnummer führt.

10. Verfahren nach Anspruch 9, wobei das Befähigen des anrufenden und angerufenen Endgeräts, Zugriff auf das Videokommunikationsnetz zu erhalten, gemäß den Subskriptionsinformationen für Videobindedienst ferner Folgendes umfasst:
die in dem Speichermodul auf der Videokommunikationsnetzseite gespeicherten Subskriptionsinformationen für Videobindedienst sind Videonummern, die Nummern des anrufenden und angerufenen Endgeräts in dem Sprachkommunikationsnetz entsprechen;
Bestimmen durch das Videokommunikationsnetz, nachdem das anrufende Endgerät oder das angerufene Endgerät eine Videokommunikations-Switching-Nachricht, die eine Videobindedienstkennung und eine anrufende Nummer oder eine angerufene Nummer führt, zu dem Videokommunikationsnetz sendet, die Videokommunikation zwischen dem anrufenden und angerufenen Endgerät durchzuführen, das Speichermodul nach den Videonummern abzufragen, die den Nummern des anrufenden und angerufenen Endgeräts in dem Sprachkommunikationsnetz entsprechen, und die Videokommunikation zwischen dem anrufenden und dem angerufenen Endgerät herzustellen.

11. Verfahren nach Anspruch 10, wobei das Verfahren vor dem Senden der Videokommunikationsnachricht ferner Folgendes umfasst:
Abfragen des Speichermoduls auf der Videokommunikationsnetzseite durch das Sprachkommunikationsnetz, um die Videonummer des anrufenden Endgeräts oder des angerufenen Endgeräts zu erhalten, und Durchführen eines Callback, das die durch den Videobindedienst des anrufenden Endgeräts oder angerufenen Endgeräts identifizierte Videonummer und die anrufende und angerufene Nummer in dem Sprachkommunikationsnetz führt; und
Registrieren des anrufenden Endgeräts oder des angerufenen Endgeräts bei dem Videokommunikationsnetz gemäß dem Callback.

12. Verfahren nach Anspruch 9, wobei das Speichermodul die Subskriptionsinformationen für den Videobindedienst des anrufenden Endgeräts und die Videonummer, die der Nummer des anrufenden Endgeräts in dem Sprachkommunikationsnetz entspricht, speichert und die Subskriptionsinformationen für den Videobindedienst des angerufenen Endgeräts und die Videonummer, die der Nummer des angerufenen Endgeräts in dem Sprachkommunikationsnetz entspricht, speichert.

13. Verfahren nach Anspruch 9, wobei das Speichermodul durch eine erweiterte Speichermodulschnittstelle oder eine konfigurierte TCP-Schnittstelle mit einem Soft-Switch auf der Videokommunikationsnetzseite gekoppelt ist; und
die Videonummern, die den Nummern des anrufenden und angerufenen Endgeräts in dem Sprachkommunikationsnetz entsprechen, durch die erweiterte Speichermodulschnittstelle oder die konfigurierte TCP-Schnittstelle abgefragt werden.

14. Verfahren nach Anspruch 12, wobei, wenn die Schnittstelle zwischen dem Speichermodul und dem Soft-Switch auf der Videokommunikationsnetzseite die erweiterte Speichermodulschnittstelle ist, die Videonummern, die Nummern des anrufenden und angerufenen Endgeräts in dem PSTN entsprechen, durch eine SRI-Nachricht abgefragt werden; und
wenn die Schnittstelle zwischen dem Speichermodul und dem Soft-Switch auf der Videokommunikationsnetzseite die TCP-Schnittstelle ist, die Videonummern, die Nummern des angerufenen und anrufenden Endgeräts in dem PSTN entsprechen, durch eine CMD-Nachricht abgefragt werden.

## Revendications

1. Système de mise en oeuvre d'une communication vidéo dans le processus d'une communication vocale, dans lequel un service vidéo est lié, comprenant un terminal, un commutateur logiciel et une unité de stockage d'informations d'abonnement pour un service de liaison vidéo du terminal, dans lequel :
le terminal est adapté pour initier, sur le réseau de communication vocale, un appel vocal au niveau du commutateur logiciel, et envoyer, sur un réseau de communication vidéo, au commutateur logiciel, une demande d'appel pour une commutation vidéo ;
le commutateur logiciel est adapté pour établir, sur le réseau de communication vocale, l'appel vocal après réception de l'appel vocal depuis le terminal, et établir une communication vidéo conformément aux informations d'abonnement pour le service de liaison vidéo du terminal obtenues en consultant l'unité de stockage des informations d'abonnement pour le service de liaison vidéo du terminal, après réception, sur le réseau de communication vidéo, de la demande d'appel pour une commutation vidéo ;
l'unité de stockage d'informations d'abonnement pour le service de liaison vidéo du terminal est adaptée pour envoyer les informations d'abonnement demandées pour le service de liaison vidéo du terminal au commutateur logiciel ; et
dans lequel, après le relais réussi de l'appel vocal entre les terminaux appelant et appelé, ou dans le processus de ce relais, le commutateur logiciel est en outre adapté pour envoyer un rappel automatique d'enregistrement de service de liaison vidéo au terminal appelant sur le réseau de protocole d'initialisation de session SIP, où le rappel automatique achemine un numéro appelant, un numéro appelé d'origine, qui est le numéro appelé utilisé dans cette communication vocale, et un numéro appelant vidéo identifié par le service de liaison vidéo.

2. Système selon la revendication 1, dans lequel l'unité de stockage d'informations d'abonnement pour le service de liaison vidéo du terminal est un module de stockage, et le module de stockage est un enregistreur de localisation nominal intelligent, SHLR, ou un serveur d'abonné nominal, HSS.

3. Système selon la revendication 2, dans lequel :
le terminal est adapté pour initier l'appel vocal ; et son terminal opposé et lui se situent dans des centraux d'administration différents ;
le commutateur logiciel comprend un commutateur logiciel auquel appartient le terminal et un commutateur logiciel auquel appartient le terminal opposé ;
le SHLR ou le HSS comprend le SHLR ou le HSS auquel le terminal appartient, le SHLR ou le HSS étant adapté pour stocker des informations d'abonnement pour le service de liaison vidéo du terminal, et le SHLR ou le HSS auquel appartient le terminal opposé, le SHLR ou le HSS étant adapté pour stocker les informations d'abonnement pour le service de liaison vidéo du terminal opposé, où :
le commutateur logiciel auquel appartient le terminal est adapté pour interroger le SHLR ou le HSS auquel le terminal appartient, de manière à obtenir les informations d'abonnement pour le service de liaison vidéo du terminal ;
le commutateur logiciel auquel appartient le terminal opposé est adapté pour interroger le SHLR ou le HSS auquel le terminal opposé appartient, de manière à obtenir les informations d'abonnement pour le service de liaison vidéo du terminal opposé.

4. Système selon la revendication 1, 2 ou 3, dans lequel le commutateur logiciel comprend un dispositif réseau adapté pour établir l'appel vocal et un dispositif réseau adapté pour établir la communication vidéo.

5. Système selon la revendication 1, 2 ou 3, dans lequel le terminal comprend un terminal adapté pour envoyer la demande d'appel pour une commutation vidéo et un terminal adapté pour envoyer l'appel vocal.

6. Système selon la revendication 1 ou 3, dans lequel :
le système comprend en outre un commutateur et une passerelle relais dans le réseau de communication vocale ; et
le terminal est adapté pour initier, par l'intermédiaire du commutateur et de la passerelle relais en séquence, l'appel vocal au commutateur logiciel.

7. Système selon la revendication 1 ou 3, dans lequel le système comprend en outre une passerelle d'accès, AG,
le terminal est adapté pour initier, par l'intermédiaire de l'AG, l'appel vocal au commutateur logiciel.

8. Système selon la revendication 1, dans lequel le système comprend en outre un centre de messagerie SMS, un centre de messagerie multimédia ou un mandataire de réseau de communication vidéo respectivement connecté au commutateur logiciel, adapté pour délivrer, par l'intermédiaire du commutateur logiciel, un message SMS, un message multimédia et un service à valeur ajoutée de réseau de communication vidéo au terminal.

9. Procédé de mise en oeuvre d'une communication vidéo dans le processus d'une communication vocale, dans lequel un service vidéo est lié, où le procédé comprend les étapes consistant à :
accéder, par un terminal appelant et un terminal appelé, au réseau de communication vocale et à un réseau de communication vidéo, respectivement ; et
établir une communication vidéo entre les terminaux appelant et appelé sur le réseau de communication vidéo pendant une communication vocale entre les terminaux appelant et appelé sur le réseau de communication vocale ;
où l'accès, par les terminaux appelant et appelé, au réseau de communication vidéo comprend en outre les étapes consistant à :
pré-stocker des informations d'abonnement pour un service de liaison vidéo dans un module de stockage du côté du réseau de communication vidéo ; et
au cours de la communication vocale entre les terminaux appelant et appelé, accéder, par un commutateur logiciel du réseau de communication vidéo, au module de stockage pour obtenir les informations d'abonnement pour le service de liaison vidéo des terminaux appelant et appelé, et permettre aux terminaux appelant et appelé d'accéder au réseau de communication vidéo conformément aux informations d'abonnement pour le service de liaison vidéo ; et
envoyer, après le relais réussi de l'appel vocal entre les terminaux appelant et appelé ou dans le processus de ce relais, au moyen du commutateur logiciel, un rappel automatique d'enregistrement de service de liaison vidéo au terminal appelant sur le réseau de protocole d'initialisation de session SIP, où le rappel automatique achemine un numéro appelant, un numéro appelé d'origine, qui est le numéro appelé utilisé dans cette communication vocale, et un numéro appelant vidéo identifié par le service de liaison vidéo.

10. Procédé selon la revendication 9, dans lequel l'étape consistant à permettre aux terminaux appelant et appelé d'accéder au réseau de communication vidéo conformément aux informations d'abonnement pour le service de liaison vidéo comprend en outre les étapes suivantes :
les informations d'abonnement pour le service de liaison vidéo stockées dans le module de stockage du côté du réseau de communication vidéo sont des numéros de vidéo correspondant à des numéros des terminaux appelant et appelé dans le réseau de communication vocale ;
après que le terminal appelant ou le terminal appelé a envoyé un message de commutation de communication vidéo, lequel achemine un identifiant de service de liaison vidéo et un numéro appelant ou un numéro appelé, au réseau de communication vidéo, déterminer, par le réseau de communication vidéo, d'établir la communication vidéo entre les terminaux appelant et appelé, interroger le module de stockage quant aux numéros de vidéo correspondant aux numéros des terminaux appelant et appelé dans le réseau de communication vocale, et établir la communication vidéo entre les terminaux appelant et appelé.

11. Procédé selon la revendication 10, dans lequel avant d'envoyer le message de communication vidéo, le procédé comprend en outre les étapes consistant à :
interroger, par le réseau de communication vocale, le module de stockage du coté réseau de communication vidéo pour obtenir le numéro de vidéo du terminal appelant ou du terminal appelé, et procéder à un rappel automatique qui achemine le numéro de vidéo identifié par le service de liaison vidéo du terminal appelant ou du terminal appelé et les numéros appelant et appelé dans le réseau de communication vocale, et ;
enregistrer le terminal appelant ou le terminal appelé avec le réseau de communication vidéo conformément au rappel automatique.

12. Procédé selon la revendication 9, dans lequel le module de stockage stocke les informations d'abonnement pour le service de liaison vidéo du terminal appelant et le numéro de vidéo correspondant au numéro du terminal appelant dans le réseau de communication vocale, et stocke les informations d'abonnement pour le service de liaison vidéo du terminal appelé et le numéro de vidéo correspondant au numéro du terminal appelé dans le réseau de communication vocale.

13. Procédé selon la revendication 9, dans lequel le module de stockage est couplé, par l'intermédiaire d'une interface de module de stockage étendue ou d'une interface TCP configurée, à un commutateur logiciel du côté du réseau de communication vidéo ; et
les numéros de vidéo correspondant aux numéros des terminaux appelant et appelé dans le réseau de communication vocale sont interrogés par l'intermédiaire de l'interface de module de stockage étendue ou de l'interface TCP configurée.

14. Procédé selon la revendication 12, dans lequel l'interface entre le module de stockage et le commutateur logiciel du côté du réseau de communication vidéo est l'interface de module de stockage étendue, les numéros de vidéo correspondant aux numéros des terminaux appelant et appelé dans le PSTN sont interrogés par l'intermédiaire d'un message SRI ;
lorsque l'interface entre le module de stockage et le commutateur logiciel du côté du réseau de communication vidéo est l'interface TCP, les numéros de vidéo correspondant aux numéros des terminaux appelant et appelé dans le PSTN sont interrogés par l'intermédiaire d'un message CMD.
